# EUROPÄISCHE PATENTSCHRIFT

(11) **EP 1 584 509 B1**
(45) Veröffentlichungstag und Bekanntmachung des Hinweises auf die Patenterteilung: **03.04.2013**
(21) Anmeldenummer: 04025215.7
(22) Anmeldetag: 22.10.2004
(51) Int. Cl.: B60J 7/00

(54) **Rollo für ein Schiebedachsystem**
Roller blind for sliding roof system
Store enroulable pour système de toit coulissant

(30) Priorität: 08.04.2004 DE 102004017459
(43) Veröffentlichungstag der Anmeldung: 12.10.2005
(73) Patentinhaber: Roof Systems Germany GmbH, 63128 Dietzenbach (DE)
(72) Erfinder: Becher, Thomas, 63110 Rodgau (DE); Böhm, Horst, 60599 Frankfurt/Main (DE); Grimm, Rainer, 60599 Frankfurt/Main (DE); Biewer, Christian, 64839 Altheim (DE)
(74) Vertreter: Prinz & Partner

(56) Entgegenhaltungen:
- DE-A1- 10 019 644
- DE-C1- 10 225 360
- GB-A- 2 307 709

## Beschreibung

Die Erfindung betrifft ein Rollo für ein Schiebedachsystem.

Ein Rollo für ein Schiebedachsystem ist im allgemeinen unterhalb einer Öffnung in einem Fahrzeugdach angebracht, um die Öffnung je nach Wunsch der Fahrzeuginsassen mehr oder weniger abzudecken. Wenn die Öffnung freigegeben sein soll, ist das Rollo auf einer Wickelachse aufgewickelt, die von einer Feder in der Aufwickelrichtung beaufschlagt wird. Von der Wickelachse kann das Rollo entgegen der Kraft der Feder abgezogen werden, so dass es die Öffnung abdeckt. Damit das Rollo, wenn es sich unterhalb der Öffnung im Fahrzeugdach befindet, nicht in den Fahrzeuginnenraum hinein durchhängt, sind die Längsränder des Rollos jeweils in einer Führungsschiene aufgenommen, so daß es quer zur Verschieberichtung gespannt gehalten werden kann.

Nachteilig bei den bekannten Rollos ist, dass die auf die Wickelachse wirkende Feder stark genug sein muss, um das Rollo zuverlässig aufwickeln zu können, gleichzeitig aber die Feder das Rollo, wenn das Rollo vom Benutzer in eine gewünschte Stellung gebracht wurde, nicht von alleine verstellen darf. Im Hinblick auf die Alterung der Feder und die unterschiedlichen Reibungsverhältnisse, die über die Lebensdauer des Rollos auftreten können, sowie die verschiedenen Federkräfte, die bei vollständig von der Wickelachse abgezogenem Rollo einerseits und nahezu vollständig aufgewickeltem Rollo andererseits wirken, lassen sich die beiden Anforderungen nur mit großem Aufwand erfüllen.

Die GB 1 416 431 zeigt eine Fensterblende für ein Flugzeug, die aus mehreren Profilteilen aus Aluminium besteht, die aneinander angrenzend angeordnet sind. Die Blende ist in seitlichen Führungsschienen mittels flacher Federn geführt.

Die US 4,825,921 zeigt ein Fliegenschutzgitter, bei dem ein Federstahlblech zur Führung des Fliegengitters an dessen Rand angebracht ist.

Die Aufgabe der Erfindung besteht darin, ein Rollo zu schaffen, welches mit geringem Aufwand einerseits zuverlässig aufgewickelt werden kann, andererseits in jeder Stellung zuverlässig verbleibt. Außerdem soll es mit einem geringen Bau- und Platzbedarf realisiert werden können.

Zur Lösung dieser Aufgabe ist erfindungsgemäß ein Rollo für ein Schiebedachsystem vorgesehen, das aus einem flexiblen Material besteht, wobei zwei Spiralfedern vorgesehen sind, die sich entlang den Längsrändern des Rollos erstrecken und sich zu einer Spirale zusammenzuziehen suchen, wobei die Spiralfedern gleichzeitig zur Führung des Rollos in einer Führungsschiene dienen, wobei die Vorspannung der Spiralfedern dazu führt, dass sie innerhalb der Führungsschienen eine vergleichsweise hohe Reibung erzeugen, so dass zuverlässig verhindert ist, dass sich das Rollo von allein in unerwünschter Weise verstellt, und dass auf eine separate Rollobremse verzichtet werden kann. Grundsätzlich bietet ein Rollo, bei dem anstelle einer auf die Wickelachse einwirkenden Feder zwei Spiralfedern verwendet werden, die unmittelbar auf das Rollo selbst einwirken, den Vorteil, dass der Teil des Rollos, der sich nicht in den Führungsschienen befindet, automatisch zu einem Wickel zusammengerollt wird. Auf diese Weise wirkt auf den Teil des Rollos, der sich in den Führungsschienen befindet, nur eine sehr geringe Zugkraft ein. Außerdem führt die Vorspannung der Spiralfedern dazu, dass sie innerhalb der Führungsschienen eine vergleichsweise hohe Reibung erzeugen. Dies verhindert zuverlässig, dass sich das Rollo von allein in unerwünschter Weise verstellt. Auf eine separate Rollobremse kann verzichtet werden. Schließlich ergibt sich ein geringerer Bauraum, da keine die Wickelachse beaufschlagende Feder notwendig ist, oder es kann auf die Wickelachse vollständig verzichtet werden, so dass sich das Rollo frei aufwickelt, sobald es die Führungsschienen verlassen hat.

Vorzugsweise ist vorgesehen, dass die Spiralfedern gleichzeitig zur Führung des Rollos in einer Führungsschiene dienen. Auf diese Weise kann auf die sonst zur Führung des Rollos verwendeten Elemente, z.B. Keder, Randwulst oder Führungsleiste, verzichtet werden.

Gemäß einer bevorzugten Ausführungsform ist vorgesehen, dass die Spiralfedern so vorgespannt sind, dass sie, wenn sie sich außerhalb der Führungsschienen befinden und kein Rollo zwischen ihnen vorhanden wäre, jeweils zu einer Spirale zusammenziehen würden, deren Spitzen voneinander abgewandt sind. Dies gewährleistet, daß der von den Spiralfedern erzeugte Rollowickel quer zu den Führungsschienen straff gespannt gehalten wird, wenn auf eine Wickelachse verzichtet wird.

Die Erfindung betrifft auch eine Baugruppe bestehend aus einem Rollo, das an seinen Längsrändern mit jeweils einer Spiralfeder versehen ist, und zwei Führungsschienen, in denen die entsprechende Spiralfeder aufgenommen ist, so daß das Rollo zwischen den Führungsschienen geführt ist, wobei sich der Teil der Spiralfedern, der sich außerhalb der Führungsschienen befindet, zusammen mit dem daran angebrachten Rollo von allein zu einem Wickel aufwickelt. Hinsichtlich der Vorteile wird auf die obigen Erläuterungen verwiesen.

Die Erfindung wird nachfolgend anhand einer bevorzugten Ausführungsform beschrieben, die in den beigefügten Zeichnungen dargestellt ist. In diesen zeigen:
- Figur 1 eine perspektivische Ansicht eines Fahrzeugdaches mit einem erfindungsgemäßen Rollo;
- Figur 2 eine schematische Seitenansicht eines erfindungsgemäßen Rollos;
- Figur 3 einen Schnitt entlang der Ebene III-III von Figur 1;
- Figur 4 in vergrößertem Maßstab den Ausschnitt IV von Figur 2; und
- Figur 5 in einer schematischen Ansicht eine Spiralfeder in einem Zustand, den sie einnimmt, wenn keine äußeren Kräfte einwirken.

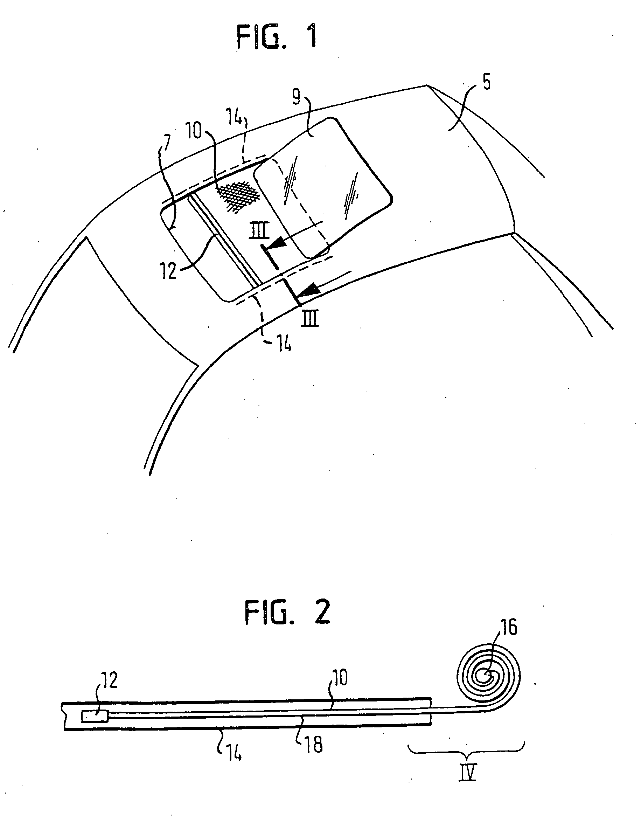

In Figur 1 ist ein Fahrzeugdach 5 zu sehen, welches mit einer Öffnung 7 versehen ist. Der Öffnung 7 ist ein Deckel 9 eines Schiebedachsystems zugeordnet. Der Deckel 9 kann zwischen einer geschlossenen Stellung, in welcher er die Öffnung 7 verschließt, und einer in Figur 1 gezeigten, geöffneten Stellung verstellt werden. Unterhalb des Deckels 9 und auch unterhalb der Öffnung 7 ist ein Rollo 10 angeordnet. Das Rollo 10 kann, bezogen auf das Fahrzeug, nach vorne und hinten verschoben werden. Wenn das Rollo 10 vollständig nach hinten geschoben ist, ist die Öffnung 7 vollständig freigegeben. Frischluft und Sonnenlicht haben dann freien Zugang zum Fahrzeuginnenraum. Wenn das Rollo 10 vollständig nach vorne geschoben ist, ist die Öffnung 7 vom Rollo abgedeckt. Frischluft und Sonnenlicht können somit nur in begrenztem Umfang in den Fahrzeuginnenraum gelangen.

Das Rollo 10 besteht aus einem flexiblen Material, beispielsweise Stoff oder einer Kunststofffolie. An seinem vorderen Rand ist ein Spriegel 12 vorgesehen, an dem ein Fahrzeuginsasse angreifen kann, um das Rollo nach vorne oder hinten zu verschieben. Seitlich entlang der Öffnung 7 erstrecken sich zwei Führungsschienen 14, in denen die beiden Längsränder des Rollos, also in der Fahrzeuglängsrichtung betrachtet der rechte und der linke Rand des Rollos 10, aufgenommen sind. Im Bereich des hinteren Endes der Öffnung 7 befindet sich der hintere Rand des Rollos, an dem ein Wickelkörper 16 angebracht ist. Der Wickelkörper ist nicht am Dach gelagert; er kann als Kunststoffleiste ausgeführt sein, die auf den hinteren Rand des Rollos aufgespritzt ist und im wesentlichen die Funktion hat, den hinteren Rand des Rollos in einer Richtung quer zur Längsrichtung des Fahrzeugs gespannt zu halten.

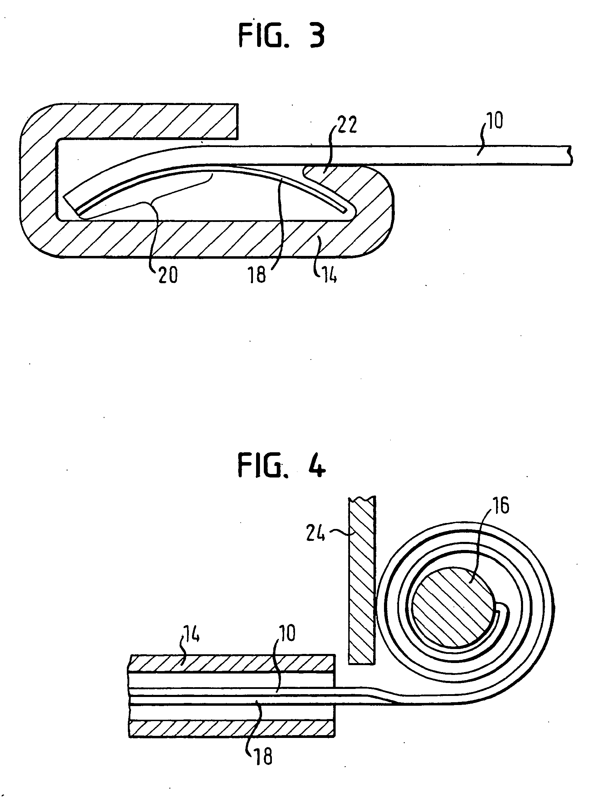

Entlang den Längsrändern des Rollos 10, also in dem den Führungsschienen 14 zugeordneten Bereich, ist jeweils eine Spiralfeder 18 vorgesehen, die als dünner Metallstreifen aus Federblech ausgebildet ist und als Führungselement dient. Die Spiralfeder 18 hat, wenn sie in der entsprechenden Führungsschiene aufgenommen ist, die in Figur 3 sichtbare, gekrümmte Querschnittsform. Das Rollo 10 ist mit den Spiralfedern 18 nur auf deren äußerer Hälfte verbunden, also vom außenliegenden Rand bis etwa zum Scheitelpunkt der Spiralfedern 18. Dieser Bereich ist in Figur 3 mit dem Bezugszeichen 20 bezeichnet. Das Rollo 10 kann mit der Spiralfeder 18 insbesondere verklebt sein.

Die Führungsschiene 14 hat im Schnitt einen allgemein rechteckigen Querschnitt, in dessen Innenraum die Spiralfeder 18 zusammen mit dem an ihr angebrachten Randabschnitt des Rollos 10 befestigt ist. Auf der zur Fahrzeugmitte gerichteten Seite weist die Führungsschiene einen Schenkel 22 auf, der zwischen das Rollo 10 und den zur Fahrzeugmitte gerichteten Abschnitt der Spiralfeder 18 eingreift, also in den Bereich, in welchem das Rollo 10 nicht mit der Spiralfeder 18 verklebt ist. Die Spiralfeder 18 kann sich dadurch unterhalb des Schenkels abstützen, um das Rollo 10 in Querrichtung gespannt zu halten.

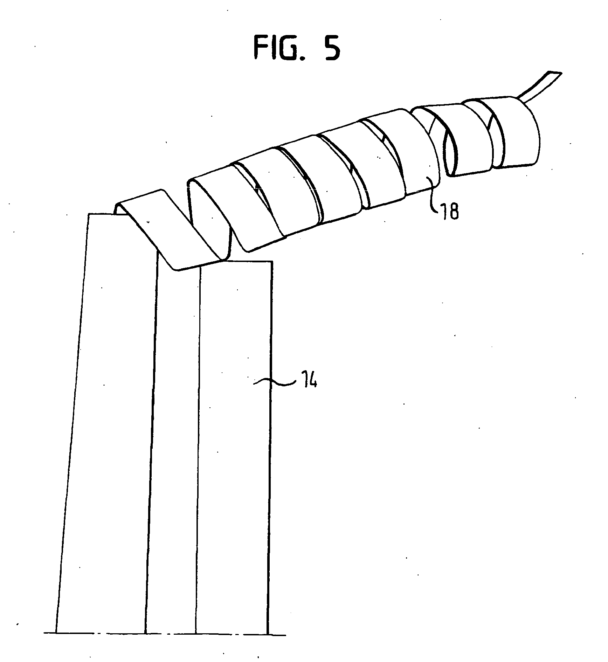

Die beiden Spiralfedern 18 sind so vorgespannt, daß sie sich selbsttätig aufrollen. Weiterhin sind sie so vorgespannt, daß sie sich "schräg" aufzurollen versuchen, wie in Figur 5 zu sehen ist. Jeder Spiralfeder 18 würde, wenn sie sich frei aufrollen kann und kein Rollo 10 und kein Wickelkörper 16 vorhanden wäre, so aufrollen, daß eine Spirale entsteht, deren freies Ende nach außen zeigt, also von der anderen Spiralfeder weg. Dies gewährleistet, daß das Rollo 10 zwischen den beiden Spiralfedern, wenn diese sich außerhalb der Führungsschienen 14 befinden, straff gespannt gehalten wird.

Wenn das Rollo 10 nach hinten verschoben wird, um die Öffnung 7 freizugeben, wird der hintere Bereich des Rollos 10 aus den Führungsschienen 14 herausgeschoben. Dabei wird es von den Spiralfedern 18 automatisch und von alleine zu einem Wickel aufgerollt. Dieser ist aufgrund der Vorspannung der Spiralfedern und aufgrund des Wickelkörpers 16 straff gespannt. Der Rollowickel liegt an einer Wand 24 an, die einen Aufnahmeraum für das aufgewickelte Rollo 10 abgrenzt.

Da keine Feder vorhanden ist, die auf das Rollo eine von der Stellung des Rollos abhängige Aufwickelkraft ausübt, ergibt sich eine konstante Zugkraft, die einer Verstellung des Rollos nach vorne entgegenwirkt. Ein weiterer Effekt ist eine Erhöhung der Verschiebekraft, so daß man darüber eine Selbsthemmung erhält. Somit bleibt ein von Hand betätigtes Rollo in jeder Zwischenposition stehen, ohne daß eine zusätzliche Rollobremse notwendig ist

Wenn das Rollo 10 die Führungsschienen 14 verläßt und zu einem Wickel aufgewickelt wird, ändern die Spiralfedern 18 ihre Querschnittsform aus der in Figur 3 gezeigten ersten Querschnittsform in eine zweite Querschnittsform, die in Figur 4 gezeigt ist. Die Spiralfedern haben einen flachen, rechteckigen Querschnitt, dessen Höhe der Materialdicke der Spiralfedern 18 entspricht. Daher ergibt sich eine Wickel mit einem geringen Durchmesser.

### Bezugszeichenliste

- 5: Fahrzeugdach
- 7: Öffnung
- 9: Deckel
- 10: Rollo
- 12: Spriegel
- 14: Führungsschiene
- 16: Wickelkörper
- 18: Führungselement
- 20: Verbindungsbereich
- 22: Schenkel
- 24: Wand

## Patentansprüche

1. Rollo (10) für ein Schiebedachsystem, das aus einem flexiblen Material besteht, wobei zwei Spiralfedern (18) vorgesehen sind, die sich entlang den Längsrändern des Rollos (10) erstrecken und sich zu einer Spirale zusammenzuziehen suchen, wobei die Spiralfedern (18) gleichzeitig zur Führung des Rollos in einer Führungsschiene (14) dienen, wobei die Vorspannung der Spiralfedern dazu führt, dass sie innerhalb der Führungsschienen eine vergleichsweise hohe Reibung erzeugen, so dass zuverlässig verhindert ist, dass sich das Rollo von allein in unerwünschter Weise verstellt, und dass auf eine separate Rollobremse verzichtet werden kann.

2. Rollo nach Anspruch 1, **dadurch gekennzeichnet, dass** die Spiralfedern (18) so vorgespannt sind, dass sie, wenn sie sich außerhalb der Führungsschiene (14) befinden und kein Rollo (10) zwischen ihnen vorhanden wäre, jeweils zu einer Spirale zusammenziehen würden, deren Spitzen voneinander abgewandt sind.

3. Rollo nach einem der vorhergehenden Ansprüche, **dadurch gekennzeichnet, dass** die Spiralfedern (18) mit den Längsrändern des Rollos (10) fest verbunden sind.

4. Baugruppe bestehend aus einem Rollo (10) nach einem der vorhergehenden Ansprüche und zwei Führungsschienen (14), in denen jeweils eine Spiralfeder (18) aufgenommen ist, so dass das Rollo (10) zwischen den Führungsschienen (14) geführt ist, wobei sich der Teil der Spiralfedern (18), der sich außerhalb der Führungsschienen (14) befindet, zusammen mit dem daran angebrachten Rollo (10) von allein zu einem Wickel aufwickelt.

## Claims

1. A window blind (10) for a sliding roof system and consisting of a flexible material, two flat spiral springs (18) being provided which extend along the longitudinal edges of the window blind (10) and tend to contract to form a spiral, the flat spiral springs (18) at the same time serving to guide the window blind in a guide rail (14), the preload of the flat spiral springs causing them to produce a comparatively high friction within the guide rails, so that the window blind is reliably prevented from shifting on its own in an undesirable manner, and that a separate window blind brake may be dispensed with.

2. The window blind according to claim 1, **characterized in that** the flat spiral springs (18) are preloaded such that if they lie outside of the guide rail (14) and no window blind (10) were present between them, they each would contract to form a spiral the points of which face away from each other.

3. The window blind according to any of the preceding claims, **characterized in that** the flat spiral springs (18) are fixedly connected with the longitudinal edges of the window blind (10).

4. An assembly unit consisting of a window blind (10) according to any of the preceding claims and of two guide rails (14) which each receive a flat spiral spring (18) so that the window blind (10) is guided between the guide rails (14), with that part of the flat spiral springs (18) which lies outside of the guide rails (14) winding up on its own to form a coil together with the window blind (10) attached thereto.

## Revendications

1. Store (10) pour système de toit ouvrant, qui est en une matière flexible, deux ressorts en spirale (18) étant prévus, lesquels s'étendent le long des bords longitudinaux du store (10) et cherchent à se resserrer en une spirale, les ressorts en spirale (18) servant en même temps au guidage du store dans un rail de guidage (14), la précharge des ressorts en spirale conduisant à ce qu'ils génèrent un frottement comparativement élevé à l'intérieur des rails de guidage de telle sorte qu'il est évité de manière fiable que le store ne se dérègle de lui-même de façon non souhaitée et qu'il est possible de se passer d'un frein de store séparé.

2. Store selon la revendication 1, **caractérisé en ce que** les ressorts en spirale (18) sont préchargés de telle sorte qu'ils se resserreraient chacun en une spirale dont les extrémités sont détournées l'une de l'autre s'ils se trouvent à l'extérieur du rail de guidage (14) et s'il n'y avait pas de store (10) présent entre eux.

3. Store selon l'une des revendications précédentes, **caractérisé en ce que** les ressorts en spirale (18) sont reliés de manière solidaire aux bords longitudinaux du store (10).

4. Ensemble composé d'un store (10) selon l'une des revendications précédentes et de deux rails de guidage (14) dans lesquels un ressort en spirale (18) respectif est reçu de sorte que le store (10) est guidé entre les rails de guidage (14), une partie des ressorts en spirale (18) qui se trouve à l'extérieur des rails de guidage (14) s'enroulant ensemble avec le store (10) monté dessus d'elle-même en un rouleau.
